(19) **Europäisches Patentamt**

**European Patent Office**

**Office européen des brevets**

(11) **EP 0 686 254 B1**

(12) **EUROPÄISCHE PATENTSCHRIFT**

(45) Veröffentlichungstag und Bekanntmachung des Hinweises auf die Patenterteilung:
**01.03.2000 Patentblatt 2000/09**

(51) Int. Cl.[7]: **G01F 1/32**

(21) Anmeldenummer: **95903803.5**

(22) Anmeldetag: **15.12.1994**

(86) Internationale Anmeldenummer:
**PCT/EP94/04161**

(87) Internationale Veröffentlichungsnummer:
**WO 95/18358 (06.07.1995 Gazette 1995/29)**

(54) **WIRBELDURCHFLUSSAUFNEHMER MIT EINEM STAUKÖRPER**

VORTEX-TYPE FLOWMETER WITH A BLUFF BODY

DEBITMETRE A VORTEX MUNI D'UN ELEMENT D'ETRANGLEMENT

(84) Benannte Vertragsstaaten:
**CH DE DK ES FR GB IT LI NL**

(30) Priorität: **28.12.1993 DE 4344747**

(43) Veröffentlichungstag der Anmeldung:
**13.12.1995 Patentblatt 1995/50**

(73) Patentinhaber:
**Endress + Hauser Flowtec AG**
**CH-4153 Reinach BL 1 (CH)**

(72) Erfinder:
• **GATZMANGA, Heinz**
**D-06366 Köthen (DE)**

• **BREIER, Andreas**
**D-06846 Dessau (DE)**

(74) Vertreter:
**Morstadt, Volker, Dipl.-Ing. et al**
**Endress + Hauser**
**Zentrale Patentabteilung**
**Postfach 2222**
**79574 Weil am Rhein (DE)**

(56) Entgegenhaltungen:
**EP-A- 0 007 553      DD-A- 256 367**
**DE-A- 2 741 827      FR-A- 2 508 634**
**US-A- 3 972 232      US-A- 4 862 750**

Printed by Xerox (UK) Business Services
2.16.7/3.6

**Beschreibung**

Die Erfindung betrifft Wirbeldurchflußaufnehmer mit einem Staukörper, mit denen nach dem Prinzip der Karman'schen Wirbeistraße der Volumendurchfluß von wandbegrenzten Flüssigkeits-, Gas- oder Dampfströmen gemessen werden kann, welche Medien im folgenden als Fluide bezeichnet sind.

Wird der Staukörper in der Mitte der Strömung des Fluids angeordnet, so lösen sich an beiden Seitenkanten des Staukörpers in der Strömung wechselseitig Wirbel ab. Die Frequenz der Wirbelablösung, die sogenannte Wirbelablösefrequenz, ist proportional zur Strömungsgeschwindigkeit und somit - für wandbegrenzte Strömungen - proportional zum Volumendurchfluß.

Die Meßgenauigkeit ist wesentlich vom Staukörper abhängig, insb. von seiner Form, seinen Abmessungen und seinem Anbringungsort. Des weiteren ist davon derjenige Bereich der Reynolds-Zahl Re, in dem das Verhältnis von Wirbelablösefrequenz zu Volumendurchfluß konstant ist und der allgemein den Meßbereich des Wirbeldurchflußaufnehmers bildet, sowie die die Meßgenauigkeit beeinflussende Streuung der Wirbelablösefrequenz abhängig.

Bisher bekannte Wirbeldurchflußaufnehmer benutzen einfache Grundformen des Staukörpers, wie z.B. Zylinder, Rechteck, Dreieck, Trapez, wobei Trapez-Staukörper häufig angewendet werden.

Mit solchen Formen des Staukörpers läßt sich jedoch nur ein Bereich konstanter Strouhal-Zahl für Reynoldszahlen Re $\geq$ 20.000, bezogen auf den Durchmesser des Meßrohrs, erzielen; auch liegt die Streuung der Strouhalzahl über 1 %.

Die Strouhal-Zahl S gibt bekanntlich den Zusammenhang von Wirbelablösefrequenz f und Strömungsgeschwindigkeit v bei gegebener Breite b des Staukörpers an: $S = fb/v$ .

Innerhalb optimaler Meßgrenzen werden bei den obigen Staukörperformen folgende Werte für die Untergrenze $Re_{min}$ der Reynolds-Zahl und damit die Untergrenze des Meßbereichs sowie für die Streuung $\sigma$ der Wirbelablösefrequenz f erreicht:

| Staukörperform | $Re_{min}$ | $\sigma/\%$ |
|---|---|---|
| Kreis | 40.000 | 4,0 |
| Rechteck | 25.000 | 3,0 |
| Dreieck, stumpf angeströmt | 21.000 | 1,5 |
| Dreieck, spitz angeströmt | 28.000 | 2,0 |
| Trapez | 25.000 | 1,0 |
| schmales Trapez | 20.000 | 2,0 |
| abgerundetes Trapez | 25.000 | 3,0 |
| T-Körper | 30.000 | 2,0 |
| Trapez/Trapez | 20.000 | 2,5 |

In der DE-A 39 16 056 ist ferner der Querschnitt eines Staukörpers lediglich zeichnerisch ohne weitere Erläuterung dargestellt (vgl. die dortige Fig. 4),

- der als Kombinationskörper

-- aus einen anströmseitigen ebenen Trapezteil

--- mit einer Länge $l_1$,
--- mit einer anströmseitigen Basisbreite $b_1$ und
--- mit einer abströmseitigen Basisbreite $b_2$ sowie

-- aus einem spaltfrei sich an den Trapezteil anschließenden Nachlaufteil mit einem Querschnitt in Form eines Dreiecks mit einer Länge $l_2$ und mit einer Basisbreite $b_3$ besteht,

- wobei folgende Bemessungsgleichungen gelten:

$$b_2/b_1 = 0,66 \tag{2'}$$

$$l_1/b_1 = 0,20 \tag{3'}$$

$$l_2/b_1 = 0,52 \tag{4'}$$

$$b_3/b_1 = 0,19 \tag{5'}$$

$$0,19 = b_3/b_1 \leq b_2/b_1 = 0,66 \tag{5''}$$

$$0,33 = b_2/2b_1 \geq b_3/b_1 = 0,19 \tag{5'''}$$

Ferner sind auch andere Kombinationskörper aus den obigen Grundformen üblich, die in turbulenten Strömungen jedoch keine wesentliche Vergrößerung des Konstanzbereichs der Strouhal-Zahl bzw. keine Verminderung der Streuung der Wirbelablösefrequenz erbringen.

Es besteht somit ein Problem in der obigen Meßbereichsbegrenzung zu kleineren als den genannten Reynolds-Zahlen hin und in der noch zu großen Streuung der Wirbelablösefrequenz bei den vorbeschriebenen bzw. üblichen Staukörpern.

Eine Aufgabe der Erfindung besteht daher darin, einen Wirbeldurchflußaufnehmer zu schaffen, der es ermöglicht, bei geringer Streuung der Wirbelablösefrequenz einen erweiterten Konstanzbereich der Strouhal-Zahl zu kleinen Reynolds-Zahlen hin zu erreichen, und für den es im Bereich eines konstanten Volumendurchfluß/Wirbelablösefrequenz-Verhältnisses möglich ist, aus den Abmessungen des Staukörpers die Strouhal-Zahl mit einer Genauigkeit zu berechnen, die für Meßgeräte akzeptabel ist.

Die Erfindung, die diese Aufgabe löst, besteht daher in einem Wirbeldurchflußaufnehmer mit einem Staukörper,

- der an diametral gegenüberliegenden Stellen mit der Innenwand eines von einem Fluid durchströmten Meßrohrs mit einem inneren Durchmesser D fest verbunden oder in einem in das Meßrohr eingesetzten Rahmen fixiert ist,
- der als Kombinationskörper

    -- aus einem anströmseitigen ebenen Trapezteil

        --- mit einer Länge $l_1$,
        --- mit einer anströmseitigen Basisbreite $b_1$ und
        --- mit einer abatrömseitigen Basisbreite $b_2$ sowie

    -- aus einen spaltfrei sich an den Trapezteil anschließenden Nachlaufteil mit einem Querschnitt in Form eines Dreiecks mit einer Länge $l_2$ und mit einer Basisbreite $b_3$ besteht,

- wobei folgende Bemessungsgleichungen gelten:

$$0,1 \leq b_1/D \leq 0,35 \tag{1}$$

$$0,6 \leq b_2/b_1 \leq 0,95 \tag{2}$$

$$0,1 \leq l_1/b_1 < 0,2 \tag{3}$$

$$0,75 \leq l_2/b_1 \leq 1,5 \tag{4}$$

$$0,5 \cdot b_2/b_1 \leq b_3/b_1 \leq b_2/b_1. \tag{5}$$

Nach einer Ausgestaltung der Erfindung ist ein Wirbelfrequenzsensor in den Nachlaufteil integriert, wobei der Wirbelfrequenzsensor bevorzugt in die vom Fluid umströmten Seiten des Nachlaufteils plan zur Oberfläche integriert ist.

Diese bevorzugte Ausgestaltung kann in Weiterbildung mit einem piezoelektrischen Biegeschwinger als Wirbelfrequenzsensor und mit einer derartigen Befestigung des Nachlaufteils am Trapezteil versehen sein, daß die Wirbel eine Bewegung des Nachlaufteils erzeugen, wie dies an sich schon in der DD-A 256 367 beschrieben ist.

Dabei wird der Nachlaufteil, der die auszulenkende Seite des piezoelektrischen Biegeschwingers enthält, so am Trapezteil befestigt, daß der Biegeschwinger auf kleinste Auslenkungen, hervorgerufen durch die Druckschwankungen im Verlauf der Wirbelstraße, anspricht und eine entsprechende Piezospannung als weiterzuverarbeitendes Meßsignal erzeugt.

Bei der Erfindung erstreckt sich somit der Staukörper rohrmittig und in seiner Höhe (= z-Achse) über das gesamte Rohr oder innerhalb des erwähnten Rahmens, und er besteht aus zwei spaltfrei in Strömungsrichtung hintereinander liegenden und mittensymmetrisch zusammengefügten Teilen. Anströmseitig wird ein ebener, schmaler Trapezteil verwendet, der mechanisch fest und verwindungsfrei mit dem Rohr oder bei großen Rohrdurchmessern mit einen Rahmen verbunden ist. Der Trapezteil führt durch seinen in Strömungsrichtung sich verjüngenden Querschnitt und seine begrenzte Länge $l_1$ zu einem festen Ablösepunkt der Strömung.

Würde dieser Trapezteil als alleiniger Staukörper verwendet, so hätte er einen Konstanzbereich der Strouhal-Zahl oberhalb von Re = 20.000 und eine Streuung σ < 2 %. Die Ursache für diese Streuung liegt in den sich abwechselnd an der Hinterkante bildenden Wirbeln, die sich schon im Wachstumsstadium beeinflussen und somit zu einer unregelmäßigen Ablösung führen können.

Beim Wirbeldurchflußaufnehmer nach der Erfindung befindet sich deshalb ein mit der Hinterkante des Trapezteils verbundener Nachlaufteil, dessen Querschnitt sich in Strömungsrichtung gleichmäßig verjüngt, also mit einem Querschnitt in Form eines Dreiecks. Dieser stetiggleichmäßige Verlauf ist ausschlaggebend für eine gegenseitig ungestörte Wirbelablösung, da damit erreicht wird, daß sich die Wirbel an den Seitenkanten des Nachlaufteils bilden. Zudem ergibt sich bei Erreichen einer definierten Wirbelgröße um die Hinterkante des Nachlaufteils herum eine Synchronisationsströmung, die die wechselseitige Ablösung stabilisiert.

Bei der Erfindung ist die Wirbelablösefrequenz in einem weitaus größerem Maß als bei Staukörpern mit stumpfer Hinterkante auschließlich von der Strömungsgeschwindigkeit bzw. dem Volumenstrom abhängig, da aufgrund der erfindungsgemäß vorgeschriebenen Bemessung nach den obigen Gleichungen (1) bis (5) sich die mit der Wirbelfrequenz pendelnde Synchronisationsströmung um die Hinterkante einstellt.

Somit ergibt sich, bezogen auf das Problem der Erweiterung des linearen Meßbereiches und der Erhöhung der Meßgenauigkeit, eine wesentlich verbesserte Volumendurchfluß-Wirbelablösefrequenz-Charakteristik.

Für den erfindungsgemäß bemessenen Staukörper ist es möglich, ein Berechnungsmodell mit verbesserter Genauigkeit zur Ermittlung der Strouhal-Zahl anzugeben, das auf der Berechnung der Wirbelbildungsfläche am Staukörper unter Berücksichtigung des dreidimensionalen Strömungsprofils und der von ihm bestimmten Änderung der Wirbelgeometrie in z-Richtung basiert. Diese Gleichung zur Berechnung der Strouhal-Zahl S lautet:

$$S = 1{,}723 \cdot (b_1/D)^{1{,}29} \cdot \exp[-0{,}282 \cdot l_2(1 - 0{,}5 \cdot b_3/b_1)/b_1] \tag{6}$$

Damit läßt sich die Strouhal-Zahl mit einem Fehler ≤ 2,5 % berechnen.

Die durch die Erfindung erzielte Vergrößerung des Bereichs konstanter Strouhal-Zahl und Verringerung der Streuung der Wirbelablösefrequenz sowie die Möglichkeit der Berechnung der strouhalzahl erweitern wesentlich die Einsatzbandbreite von Wirbeldurchflußaufnehmern.

Die Erfindung wird nun anhand eines Ausführungsbeispiels unter Bezugnahme auf die Zeichnungen näher beschrieben.

Fig. 1 zeigt      den Querschnitt eines Staukörpers nach der Erfindung und schematisch dessen Anordnung in Meßrohr,

Fig. 2 zeigt      geometrische Bestimmungsgrößen des Staukörpers, und

Fig. 3 zeigt      den Querschnitt des eingangs referierten, vorbeschrieben Staukörpers.

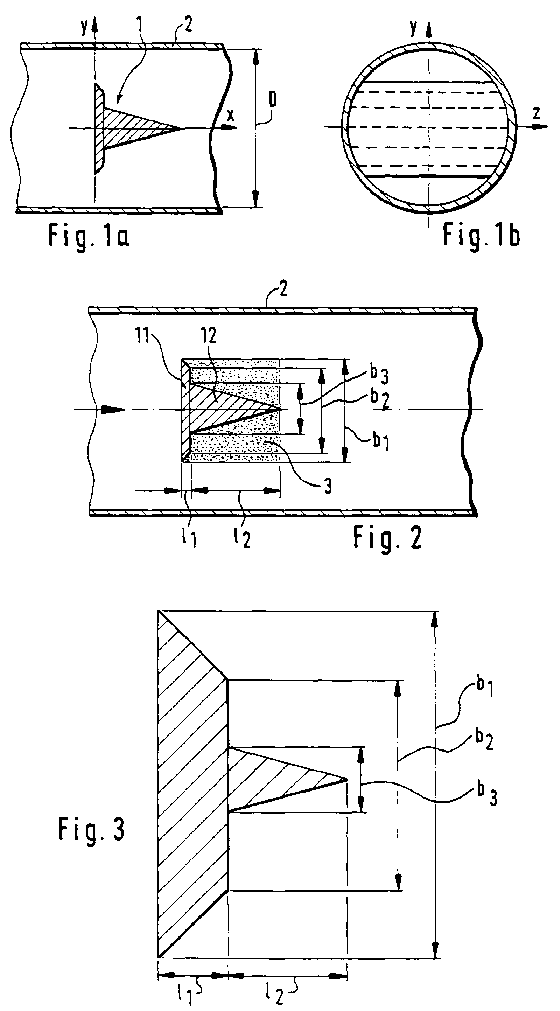

Die Fig. 1 verdeutlicht die Anordnung eines Staukörpers 1 in einem Meßrohr 2, das den Innendurchmesser D aufweist. In Fig. 1a ist die x-y-Ebene und in Fig. 1b die y-z-Ebene dargestellt. Dabei ist zu erkennen, daß die Höhe des Staukörpers 1 (= Abmessung in Richtung der z-Achse) so ausgelegt ist, daß Rohrwand und Staukörper sich spaltfrei berühren.

Bei Rohrdurchmessern D > 100 mm befindet sich der Staukörper bevorzugt so in einem Rahmen, daß die Kopf- und die Fußseite des Staukörpers spaltfrei mit dem Rahmen abschließen. Diese Rahmen-Konstruktion muß vollständig im Fluidstrom angeordnet sein.

Fig. 2 zeigt den aus einem Trapezteil 11 und einem Nachlaufteil 12 mit dreieckigem Querschnitt bestehenden Staukörper 1 mit seinen geometrischen Bestimmungsgrößen Länge $l_1$ des Trapezteils 11, Länge $l_2$ des Dreieck, anströmseitige Basisbreite $b_1$ des Trapezteils, dessen abströmseitige Basisbreite $b_2$ und Basisbreite $b_3$ des Dreiecks.

Werden diese Abmessungen innerhalb der Grenzen der obigen Gleichungen gewählt, ergibt sich in vollständig ausgebildeter turbulenter Strömung mit axialsymmetrischem Strömungsprofil ein konstanter Bereich der Strouhal-Zahl über einen Reynolds-Zahlbereich von 7.500 < Re < 350.000. In diesem Bereich ist die turbulenzbedingte Streuung der Wirbelablösefrequenz < 0,75 %.

Die in Fig. 2 gepunktet gezeichneten Flächen 3 sind die der obigen Berechnung der Strouhal-Zahl zugrundegelegten Wirbelbildungsflächen.

## Patentansprüche

1. Wirbeldurchflußaufnehmer mit einem Staukörper (1),

   - der an diametral gegenüberliegenden Stellen mit der Innenwand eines von einem Fluid durchströmten Meßrohrs (2) mit einem inneren Durchmesser D fest verbunden oder in einem in das Meßrohr eingesetzten Rahmen fixiert ist,
   - der als Kombinationskörper

      -- aus einem anströmseitigen ebenen Trapezteil (11)

         --- mit einer Länge $l_1$,
         --- mit einer anströmseitigen Basisbreite $b_1$ und
         --- mit einer abströmseitigen Basisbreite $b_2$ sowie

      -- aus einem spaltfrei sich an den Trapezteil sich in Strömungsrichtung verjüngenden anschließenden Nachlaufteil (12) mit einem Querschnitt in Form eines Dreiecks mit einer Länge $l_2$ und mit einer Basisbreite $b_3$ besteht,

   - wobei folgende Bemessungsgleichungen gelten:

$$0,1 \le b_1/D \le 0,35 \tag{1}$$

$$0,6 \le b_2/b_1 \le 0,95 \tag{2}$$

$$0,1 \le l_1/b_1 \le 0,2 \tag{3}$$

$$0,75 \le l_2/b_1 \le 1,5 \tag{4}$$

$$0,5 \cdot b_2/b_1 \le b_3/b_1 \le b_2/b_1 \tag{5}$$

2. Wirbeldurchflußaufnehmer nach Anspruch 1 mit einem Wirbelfrequenzsensor, der in den Nachlaufteil integriert ist.

3. Wirbeldurchflußaufnehmer nach Anspruch 2, bei dem der Wirbelfrequenzsensor in die vom Fluid umströmten Seiten des Nachlaufteils plan zur Oberfläche integriert ist.

4. Wirbeldurchflußaufnehmer nach Anspruch 2 mit einem piezoelektrischen Biegeschwinger als Wirbelfrequenzsensor und mit einer derartigen, Befestigung des Nachlaufteils am Trapezteil, daß die Wirbel eine Bewegung des Nachlaufteils erzeugen.

## Claims

1. A vortex flow sensor with a drag body (1)

   - which is permanently connected with the internal wall of a fluid-conducting measuring tube (2) of inside diameter D, or fixed in a frame set in the measuring tube, at diametrically opposed points, and
   - which is a combination body consisting of

      -- an upstream-side flat trapezoidal part (11) tapering off in the direction of flow and having

         --- a length $l_1$,
         --- a base width $b_1$ on the upstream side, and
         --- a base width $b_2$, on the downstream side, and

-- a wake part (12) adjoining the trapezoidal part without a gap and having a cross section in the form of a triangle of length $l_2$ and base width $b_3$,

- with the following dimensioning equations holding:

$$0.1 \leq b_1/D \leq 0.35 \tag{1}$$

$$0.6 \leq b_2/b_1 \leq 0.95 \tag{2}$$

$$0.1 \leq l_1/b_1 \leq 0.2 \tag{3}$$

$$0.75 \leq l_2/b_1 \leq 1.5 \tag{4}$$

$$0.5 \cdot b_2/b_1 \leq b_3/b_1 \leq b_2/b_1 \tag{5}$$

2. The vortex flow sensor as claimed in claim 1, comprising a vortex frequency sensor which is incorporated in the wake part.

3. The vortex flow sensor as claimed in claim 2 wherein the vortex frequency sensor is incorporated in those sides of the wake part around which the fluid flows, level with the surface thereof.

4. The vortex flow sensor as claimed in claim 2, comprising a piezoelectric vibrator as the vortex frequency sensor, with the wake part attached to the trapezoidal part in such a way that the vortices produce a movement of the wake part.

**Revendications**

1. Capteur de flux tourbillonnaire comprenant un corps de retenue (1),

- qui est relié de façon inamovible en des points diamétralement opposés à la paroi intérieure d'un tube de mesure (2) de diamètre intérieur D parcouru par un fluide ou fixé dans un cadre placé dans le tube de mesure, lequel corps de retenue est constitué
- en tant que corps combiné

-- d'une partie trapézoïdale plane (11) côté arrivée de l'écoulement

--- avec une longueur $l_1$
--- avec une largeur de base $b_1$ côté arrivée de l'écoulement et
--- avec une largeur de base $b_2$ côté évacuation de l'écoulement

-- et d'une partie de sillage (12) se raccordant sans interstice à la partie trapézoïdale, ladite partie de sillage se rétrécissant dans le sens de l'écoulement, ayant une section de forme triangulaire avec une longueur $l_2$ et une largeur de base $b_3$,

- les équations de dimensionnement suivantes s'appliquant:

$$0,1 \leq b_1/D \leq 0,35 \tag{1}$$

$$0,6 \leq b_2/b_1 \leq 0,95 \tag{2}$$

$$0,1 \leq l_1/b_1 \leq 0,2 \tag{3}$$

$$0,75 \leq l_2/b_1 \leq 1,5 \tag{4}$$

$$0,5 \cdot b_2/b_1 \leq b_3/b_1 \leq b_2/b_1 \tag{5}$$

2. Capteur de flux tourbillonnaire selon la revendication 1, comprenant un capteur de fréquence tourbillonnaire intégré dans la partie de sillage.

3. Capteur de flux tourbillonnaire selon la revendication 2, sur lequel le capteur de fréquence tourbillonnaire est intégré dans le plan de la surface, dans les faces entourées de fluide de la partie de sillage.

4. Capteur de flux tourbillonnaire selon la revendication 2, muni d'un résonateur de flexion piézoélectrique en tant que capteur de fréquence tourbillonnaire et d'une fixation de la partie de sillage sur la partie trapézoïdale, de telle sorte que les tourbillons génèrent un mouvement de la partie de sillage.

Fig.1a

Fig.1b

Fig. 2

Fig. 3